Europäisches Patentamt

European Patent Office

Office européen des brevets

(11) Veröffentlichungsnummer : **0 379 144 B1**

## (12) EUROPÄISCHE PATENTSCHRIFT

(45) Veröffentlichungstag der Patentschrift :
**07.10.92 Patentblatt 92/41**

(51) Int. Cl.⁵ : **A21D 13/00, A21D 13/02**

(21) Anmeldenummer : **90100831.8**

(22) Anmeldetag : **16.01.90**

(30) Priorität : **17.01.89 IT 4150289**

(43) Veröffentlichungstag der Anmeldung :
**25.07.90 Patentblatt 90/30**

(45) Bekanntmachung des Hinweises auf die
Patenterteilung :
**07.10.92 Patentblatt 92/41**

(84) Benannte Vertragsstaaten :
**AT BE CH DE ES FR GB GR LI NL SE**

(56) Entgegenhaltungen :
**US-A- 3 767 423**
**BAKERS DIGEST, Band 59, Nr. 1, Mai 1985,**
**Seite 44, Shawnee Mission, Kansas, US;**
**"Barley bran enters formulating arena to**
**help'enrich' products with fiber"**

(73) Patentinhaber : **PIZZA WORLD SAS**
**Via Pigafetta 26**
**I-30021 Porto Santa Margherita Di Caorle**
**(Venezia) (IT)**

(72) Erfinder : **Marchesin, Gabriele**
**via Pigafetta no. 26**
**I-Porto Santa Margherita Di Caorle (IT)**

(74) Vertreter : **Kreutz, Karl Jürgen, Dipl.-Ing.**
**Patentanwalt Osterwaldstrasse 149**
**W-8000 München 40 (DE)**

(54) **Mischung aus Mehlsorten und Kleie für die Herstellung von Soja-Pizza.**

EP 0 379 144 B1

**Beschreibung**

Zur Zeit werden die Pizzas auf dem Markt mit Weichweizen zubereitet, wobei jeder Pizzabäcker die beste Zusammensetzung für eine Pizza guter Qualität auswählt.

Auf dem Pizzasektor wurde bisher noch kein vorbereitetes Produkt mit Sojamehlinhalt realisiert und vermarktet.

Die Vorteile aus der Pizzaherstellung mit Sojamehl sind sehr zahlreich, denn die Sojabohne enthält mehr Proteine und Edelsalze, weniger Kalorien, macht nicht durstig, ist leicht verdaulich, bietet viele Vorteile für ältere Menschen.

Gegenstand des vorliegenden Patents ist eine Mischung für Pizzas aus mehreren Mehlsorten, deren Bestandteile nach folgenden optimalen Prozentanteilen gemischt werden:

90%   Weichweizenmehl der Klasse "0" oder "00"

2,5%   feine Lebensmittelkleie aus Sojabohnen

7,5%   Vollsojamehl für Lebensmittel

Die angegebenen Prozentanteile können in folgender Abstufung variieren:

Weichweizenmehl der Klasse "0" bzw. "00" von 70% bis 98%; feine Lebensmittelkleie aus Sojabohnen von 1% bis 29%; Vollsojamehl für Lebensmittel von 1% bis 29%.

Eine weiter Lösung besteht aus einer Mischung von verschiedenen Mehlsorten, deren Bestandteile nach folgenden optimalen Prozentanteilen gemischt werden:

12,5%      feine Lebensmittelkleie aus Sojabohnen

87,5%      Weichweizenmehl "0" bzw. "00"

Diese Prozentanteile können in folgender Abstufung variieren: von 4,5% bis 20,5% die feine Lebensmittelkleie aus Sojabohnen; von 79,5% bis 95,5% das Weichweizenmehl "0" bzw. "00".

Das Produkt wird pulvrig gemahlen und gemischt, dann verpackt bzw. in Säcken für den Markt bereitgestellt.

Dies sind schematisch die Modalitäten, nach denen der Fachmann die Erfindung gemäß den Ansprüchen nutzen kann, wobei in der praktischen Anwendung auch andere Varianten möglich sind.

**Patentansprüche**

1) Mischung aus Mehlsorten und Kleie für die Herstellung von Pizzas, dadurch gekennzeichnet, daß sie aus folgenden Bestandteilen besteht:

Weichweizenmehl der Klasse "0" bzw. "00" von 70% bis 98%;

feine Lebensmittelkleie aus Sojabohnen von 1% bis 29%;

Vollsojamehl für Lebensmittel von 1% bis 29%.

2) Mischung aus Mehlsorten und Kleie für die Herstellung von Pizzas, dadurch gekennzeichnet, daß sie aus folgenden Bestandteilen besteht: feine Lebensmittelkleie aus Sojabohnen zu 12% und Weichweizenmehl "0" bzw. "00" zu 88%.

3) Mischung aus Mehlsorten und Kleie für die Herstellung von Pizzas nach Patentanspruch 2, dadurch gekennzeichnet, daß der Prozentanteil feiner Lebensmittelkleie aus Sojabohnen zwischen 5% und 20% und der Prozentanteil an Weichweizenmehl "0" bzw. "00" zwischen 80% und 95% variieren kann.

**Claims**

1) Mixture of flour types and bran for the production of pizzas, characterised therein that it comprises the following ingredients:

Soft-wheat flour of grade "0" or "00", from 70% to 98%

Fine food-grade bran from soya beans, from 1% to 29%

Food-grade wholemeal soya flour, from 1% to 29%

2) Mixture of flour types and bran for the production of pizzas, characterised therein that it comprises the following ingredients: fine food-grade bran from soya beans, 12% and soft-wheat flour of grade "0" or "00", 88%

3) Mixture of flour types and bran for the production of pizzas as claimed in Claim 2, characterised therein that the percentage of fine food-grade bran from soya beans can vary between 5% and 20% and the percentage of soft-wheat flour of grade "0" and "00" between 80% and 95%.

**Revendications**

1.  Mélange de variétés de farine et de son pour la production de pizzas, caractérisé par les ingrédients suivants : farine de blé tendre de classes "0" et "00" dans des proportions de 70 % à 98 % ; du son alimentaire fin de fèves de soja de 1 % à 29 % ; farine de soja intégrale pour denrées alimentaires de 1 % à 29 % .

2.  Mélange de variétés de farine et de son pour la production de pizzas, caractérisé par les ingrédients suivants : son alimentaire fin de fèves de soja dans une proportion de 12 % et de farine de blé tendre "0" et "00" en proportion de 88 % .

3.  Mélange de variétés de farine et de son pour la production de pizzas selon la revendication 2, caractérisé en ce que le pourcentage de son alimentaire fin de fèves de soja peut varier entre 5 % et 20 %, et le pourcentage de farine de blé tendre "0" et "00" entre 80 % et 95 % .